(19) **Europäisches Patentamt**

**European Patent Office**

**Office européen des brevets**

(11) **EP 1 189 306 B1**

(12) **EUROPEAN PATENT SPECIFICATION**

(45) Date of publication and mention
of the grant of the patent:
**01.12.2004  Bulletin 2004/49**

(51) Int Cl.7: **H01Q 21/00**, H01Q 7/00,
G07C 9/00, G01V 3/10,
B60R 25/00, E05B 49/00,
E05B 65/20

(21) Application number: **01307905.8**

(22) Date of filing: **17.09.2001**

(54) **A security system**

Sicherheitssystem

Système de sécurité

(84) Designated Contracting States:
**DE FR GB IE**

(30) Priority: **19.09.2000  GB 0022940**
**02.03.2001  GB 0105160**

(43) Date of publication of application:
**20.03.2002  Bulletin 2002/12**

(73) Proprietor: **Land Rover**
**Lighthorne, Warwick CV35 0RG (GB)**

(72) Inventors:
• **Greenwood, Jeremy John**
**Sutton Coldfield, West Midlands B73 5LL (GB)**

• **Talbot, Kevin Trevor**
**Lichfield, Staffordshire WS13 7JJ (GB)**
• **Bottomley, Christopher Richard**
**Coventry, West Midlands CV6 1GL (GB)**

(74) Representative: **Farrow, Robert Michael et al**
**Land Rover,**
**Patent Department 53G 16/4,**
**Banbury Road,**
**Lighthorne**
**Warwick CV35 0RG (GB)**

(56) References cited:
**EP-A- 0 783 190       DE-A- 19 712 911**
**DE-A- 19 718 423       DE-A- 19 845 649**
**DE-C- 19 836 957       US-A- 5 600 323**

**Description**

This invention relates to security systems. It is particularly applicable to vehicle security systems, but also to other security systems such as those for buildings.

Passive entry and passive starting systems are known for vehicles and allow a user to gain entry to a vehicle by simply operating a door handle and to remobilize passively and start an engine or other subsystem of the vehicle, e.g. by pressing a button. All this can be achieved by a user simply carrying a transponder about their person.

A system of this type might work, on detection of door handle operation, by sending a challenge to a remote transponder using a low frequency signal, e.g. 125 kHz. The transponder might then respond with an encrypted reply on a higher frequency, e.g. 433 MHz. The low frequency (LF) signal may be sent from coils located near the front doors and boot and further coils may be installed in the interior of the vehicle so as to establish when the transponder is inside the vehicle to facilitate engine starting. This general type of passive entry and starting system is discussed in, for example, US 4,973,958 and in EP 0783190.

It is a problem with some prior art security systems that a criminal can employ transmitter-receiver pairs with a two-way link between the vehicle and its owner. The criminal may succeed in gaining access to the car, even though the authorising transponder is not in his possession or even within range of the vehicle. One arrangement which provides protection against such so-called relay hackers is disclosed in our co-pending application GB 2332548. Further systems are known from DE 19836957 and DE 19845649.

There are other problems associated in particular with the "passive start" of a passive entry and passive enable/start arrangement. If, for example, detectors for passive starting rely on distance attenuation to determine whether a user is in the immediate locality of the driver's seat, it might prove difficult, due to the variability and shape of the magnetic fields, to guarantee completely reliable operation. For example a user carrying the transponder might be leaning against a driver's window while a child is standing on the driver's seat and this might cause the system to mistakenly determine that the conditions for enabling the starter switch had been satisfied.

It is an object of this invention to provide an improved security system.

Accordingly, the invention provides a security system in accordance with appended claim 1.

The vector information preferably comprises three components which are, most conveniently, mutually perpendicular.

Preferably the vector information comprises the relative directions of at least a component of the signals from the respective transmitters. This has the advantage that the relative directions are not affected by the orientation of the transponder relative to the protected object.

Preferably the vector information comprises the relative strengths of at least a component of the signals from the respective transmitters.

The transponder may be arranged to relay said vector information to the security controller, and the security controller arranged to determine from the vector information the position of the transponder in relation to the protected object.

Alternatively the transponder may be arranged to determine from the vector information its position in relation to the protected object , and to vary its response accordingly.

For example, the security controller may be arranged to carry out the comparison between said vector information and the vector map of an area associated with the protected object, the map containing the vector information consistent with the transponder being at various positions within the area.

The transmitters may be arranged in groups, each group comprising at least two transmitters located substantially together in different, preferably mutually orthogonal, orientations.

The challenge signal may comprise a plurality of components from different transmitters, and the relative strengths of the components within the signal arranged to vary with time during transmission of the challenge signal. This arrangement increases security because a hacker would need to be able to detect the changes of direction of the field and transmit the relevant information back to the controller in the required format.

The transponder preferably comprises a plurality of sensors, such as inductive coils or Hall effect transducers, arranged to detect different components of the challenge signal, which are preferably substantially mutually orthogonal.

Preferably the transponder further comprises a calibration transmitter arranged to transmit a signal at a known orientation relative to said sensors so as to enable calibration of the sensors.

The object may be a vehicle, in which case the security function may comprise allowing access to the vehicle.

Preferably the system further comprises a plurality of sensors each associated with a respective closure of the vehicle, such as a door or boot lid, the security controller is arranged to issue the challenge signal in response to an attempt by a user to open one of the closures, and the comparison would indicate which closure the user is attempting to open.

Alternatively the security function may comprise enabling the vehicle to start, in which case the comparison would indicate the vector information being consistent with the transponder being inside the vehicle.

Preferably the challenge signals are transmitted as magnetic fields which oscillate at a carrier frequency which is low enough for the area in which the transponder is expected to operate to be significantly less than one wavelength of the challenge signals if they were transmitted as electromagnetic radiation. If this is the case, the fields produced by the challenge signals can be considered as simple magnetic fields and any changes in the field within the area of interest will be substantially in phase with the changes at the transmitter coils. For a vehicle security system this means that the frequency is preferably below about 10MHz, and more preferably below about 1MHz.

The response signal can be transmitted at any suitable frequency, such as 13.56 MHz or 434MHz.

Preferred embodiments of the invention will now be described by way of example only and with reference to the accompanying drawings, in which:

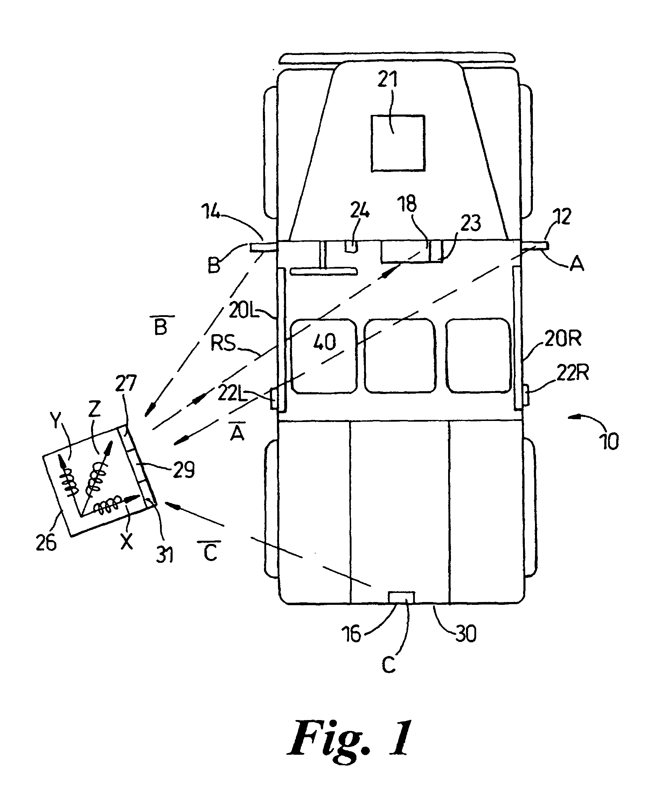

Figure 1 is a schematic diagram of a vehicle including a security system according to the invention;

Figure 2 is a diagram showing the magnetic field produced by the system of Figure 1,

Figures 3a, 3b, 3c, and 3d show the effect of phase relationships on the addition of fields from two transmitters of the system of Figure 1,

Figure 4 is a flow chart of one aspect of the operation of the system of Figure 1,

Figure 5 is a flow chart of another aspect of the operation of the system of Figure 1,

Figure 6 shows the coils making up a transponder forming part of a second embodiment of the invention, and

Figure 7 shows a pair of transmitter coils forming part of a third embodiment of the invention.

Referring to the figures, a vehicle 10 comprises three transmitters in the form of coils A, B, C spaced around it. The coils A, B, C are located one each A, B in opposing wing mirror assemblies 12, 14 and one C in a high level brake light assembly 16 at the rear end of the vehicle 10.

The vehicle further comprises a security controller 18 which has control over vehicle access through a set of doors 20L, 20R and also has control over starting the vehicle engine 21. The security system for controlling vehicle access and vehicle starting is in the form of so-called "passive entry/passive start" system. This involves the controller 18 sending out a challenge signal using coils A, B, C upon detection of an access request such as the operation of a door handle 22L, 22R. If the challenge signal is legitimately responded to with a valid and plausible response signal, which is received by a receiver 23 in the control unit 18, the doors unlatch to allow access. In similar fashion, engine starting is also passively enabled upon pressing a starter button 24.

The challenge signal is sent out initially using the coil B nearest to the door handle 22L which has been operated or, if it is passive starting which is being attempted, by the coil B nearest to the starter switch. The challenge signal is then sent out again sequentially on at least one of the other coils A, C, the signal from each coil A, B, C being uniquely identified with the location 12, 14, 16 of that coil A, B, C.

The response signal RS, if any, to the challenge signal is provided by a portable transponder 26 which is adapted to be carried by an authorised user of the vehicle 10. The transponder 26 includes three substantially orthogonal coils X, Y, Z. These are connected via analogue switches to a single low frequency (LF) receiver, although it will be apparent that in another embodiment it would be possible to connect them instead to three LF receivers without using analogue switches.

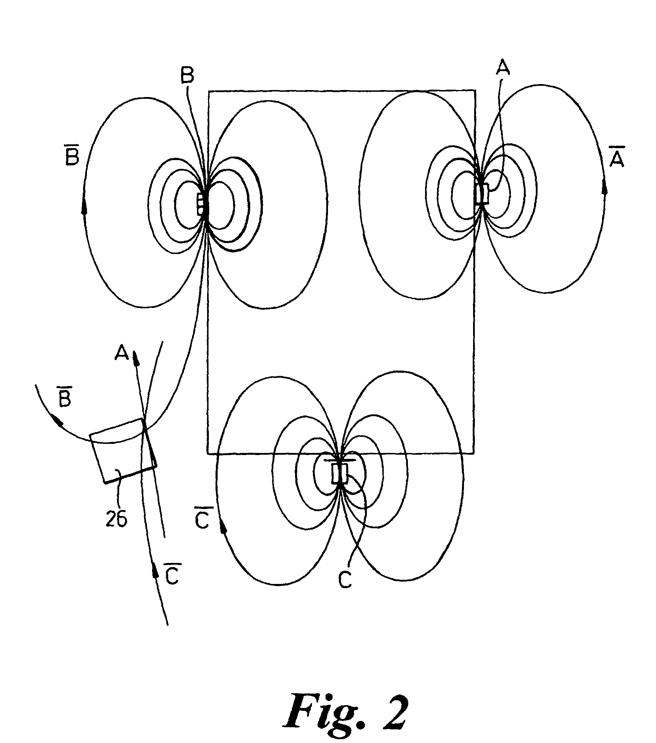

Referring to Figure 2, because of the relatively low frequency of the challenge signal, which in this example has a nominal carrier frequency of 125kHz, for all relevant positions of the transponder 26 near the vehicle, the field produced by the coils A, B, C will behave in the near field manner. This means that it can be considered as an oscillating magnetic field, the magnitude and direction of which will be as shown by the lines of flux in Figure 2. The magnitude of the field strength will vary substantially sinusoidally, giving two changes of field direction with each cycle. The strength of the field from each coil A, B, C falls off in an approximately cube root relationship with distance from the respective coil. It will be appreciated that for any given position around the vehicle 10, there will be a fixed relationship between the directions and magnitudes of the magnetic field signals from the three coils A, B, C. However, this relationship will vary in a quite complex manner because the direction of the fields varies not only with the relative direction of the point of measurement from the coil, but also with the distance between the point of measurement and the coil.

Therefore in order to use the vector information regarding the fields, it is necessary to produce a map of the area around the vehicle having, for each position, stored values for the relative directions and strengths of the fields from the three coils A, B, C. This gives unique values for each position so that the position of the transponder 26 can be identified from the signals it receives.

The signal levels from each of the three transponder coils X, Y, Z are measured and are processed to give the three orthogonal components of the field vector $\bar{A}$, $\bar{B}$, $\bar{C}$, of the challenge signal coming in from each of the coils A, B, C. The vector information for each of the transmitter coils A, B, C is sent back to the security controller 18 as an encrypted response signal, which can either be in the form of an angle and magnitude, or in the form of the components e.g. $x_b$, $y_b$, $z_b$ in which each component indicates the signal levels detected in the transponder coils X, Y, Z from the vector of the signal coming in from the vehicle coil B in question. It should be noted that in order to determine the sign of each component, that is to assign a positive or negative value to it, the timing of the measurement of the three components needs to be co-ordinated so that phase relationship can determined. Then one of the components $x_b$, $y_b$, $z_b$ is defined as positive, e.g. $x_b$, and then the other components $y_b$, $z_b$ are designated as positive or negative depending on whether the signals detected by the coils Y and Z are in phase or in antiphase with that detected by coil X. The three components of the signals for each of the three coils A, B, C are sent back by the transponder to the controller 18 which can then use them to determine the position of the transponder as will be described in more detail below.

The format of the challenge and response signals is as follows. Firstly the challenge signal includes at least an element which is random,

i.e. Challenge Signal = Random Challenge

The response signal is encrypted and includes the random challenge signal, or the random element from it, and the three components of the signals from each of the three coils A, B, C, i.e.

Response Signal RS = Encrypted (random challenge+vector information)

The encryption is preferable a symmetrical algorithm having the or each encryption key stored in both the transponder 26 and in the security controller 18. The response signal is transmitted in RF, in this example at 434 MHz, and is decrypted by the security controller 18 to check that the encrypted challenge in the response signal RS matches the transmitted challenge signal and, if so, the transponder 26 is authenticated.

It will be appreciated that the direction of the field of the signal from one of the coils A, B or C as measured by the transponder will depend not only on the relative positions of the vehicle and the transponder, but also on the orientation of the transponder. In order to eliminate the effects of the orientation of the transponder it is necessary to measure the relative directions of pairs of the coils A, B, C as measured from the transponder. The controller therefore first determines the angles of the fields for each of the three signals, e.g.

$$\phi_A = f(x_A, y_A, z_A),$$

similarly for B and C

It then measures the difference between the angles of each pair of coils A and B, A and C, and B and C i.e.

$$\phi_{AB} = \phi_A - \phi_B \text{ , } \phi_{AC} = \phi_A - \phi_C, \phi_{BC} = \phi_B - \phi_C \text{ .}$$

These relative angles are independent of the orientation of the transponder.

The security controller 18 uses the vector information to determine the position of the transponder 26 in relation to the vehicle 10, by comparing the relative angles with a vector map of the area around the vehicle.

In the simplest case only the relative angles of the field vectors A, B, C are used to compare with the vector map. However the three components $x_a$, $y_a$, $z_a$, of the vector for coil A also indicate the magnitude of the field vector for the signal from coil A, and likewise the components of the signals from coils B and C. The absolute magnitudes would be variable depending on a number of factors, but the relative magnitudes of the signals from the three coils A, B, C could be measured and included in the vector map to give further information on the position of the transponder.

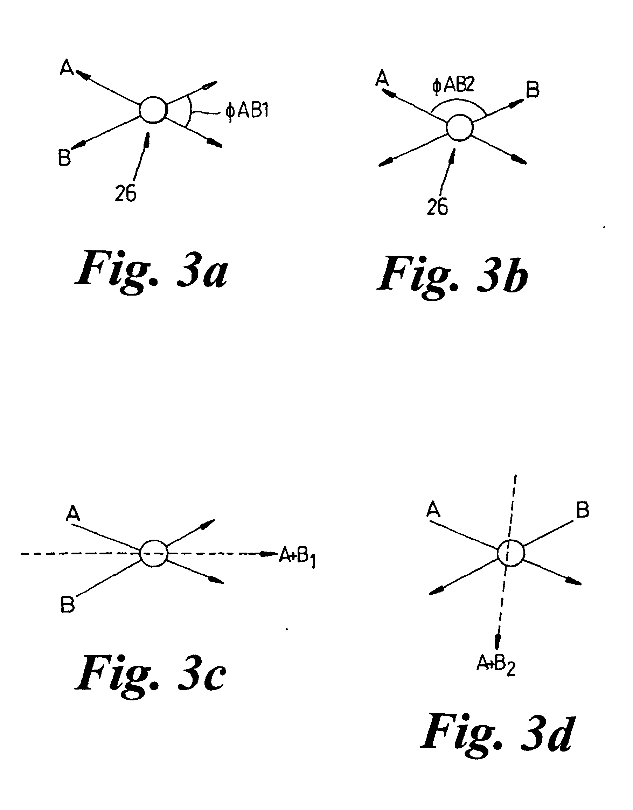

In some cases sensors may be used in the transponder which cannot measure the phase information of the field vectors in the detected signals. Referring to Figures 3a and 3b, this produces a degree of ambiguity in the relative angles of two of the filed vectors A and B. If, as shown, field A is oscillating along the direction of arrow A and field B is oscillating along the direction of arrow B, then the angle between the vectors could be $\phi_{AB1}$ as shown in Figure 3a, or $\phi_{AB2}$ as shown in Figure 3b. In order to resolve this, the signals A and B are transmitted both individually, and together. For example the controller 18 may produce a signal from coil A, then one simultaneously from A and B, and then one solely from B. Referring to Figures 3c and 3d, if the angle between the two field vectors is acute, that is less than 90°, as shown in Figure 3c, then the combined vector A+$B_1$ will be larger than if the angle between the two vectors is obtuse, that is greater than 90°, as shown in Figure 3d as A+$B_2$.

As a means of confirming the relative angles it may be preferred to reverse the phase on one of the coils A, B and produce a second combined signal A-B. This will enable a comparison between the vector sums of the two combined signals to determine which has the greater magnitude.

In an alternative embodiment, the transponder 26 could include the logic means necessary to determine internally its position with respect to the vehicle 10 and merely relay this information back to the security controller 18. The transponder 26 may include sufficient processing ability to enable it to determine from the signals it detects whether it is in a position consistent with being in the possession of a person opening a door or boot of the vehicle. In this case it will only send a response signal if that condition is met.

The security controller 18 also includes in that plausibility check any additional information it may have about the transponder's likely location. For example, if the challenge signal was initiated by operating a particular door handle 22L, the security controller 18 can assume that, for the response signal RS to pass the plausibility test, the vector information it 18 receives as a response signal RS should put the transponder 26 in the region of the vector map nearest to that door 20L.

In practice, more vehicle coils may be preferred, in order to reduce the range required from each vehicle coil A, B, C.

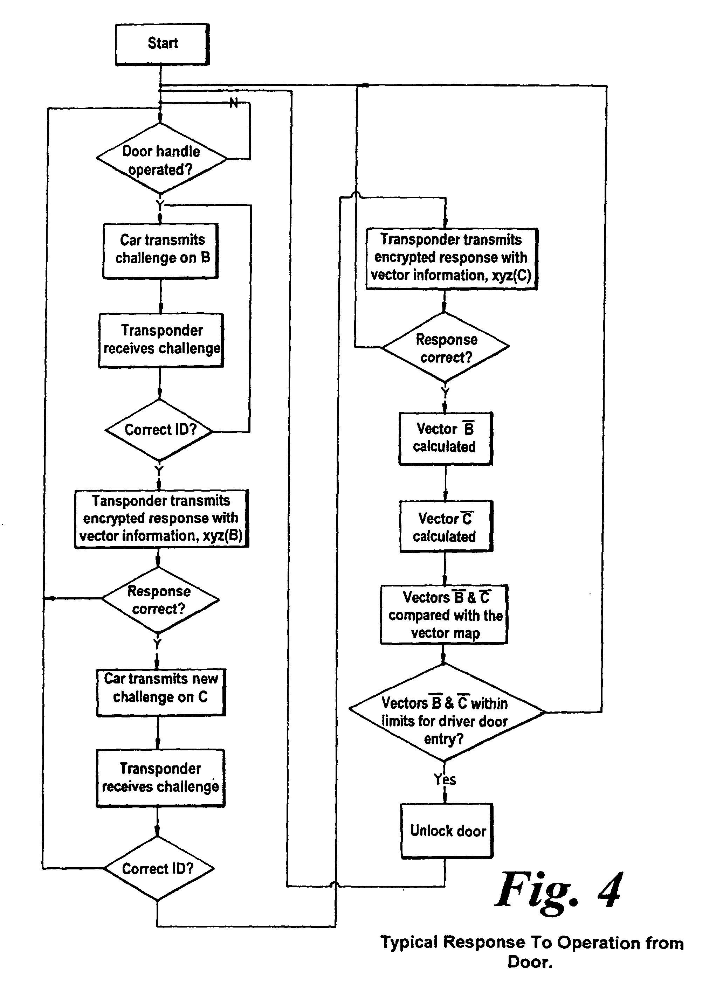

Referring to Figure 4, an example of the operation of the system will now be described. If a user approaches the vehicle 10 and operates a door handle 22L, this initiates a challenge from the vehicle 10 on the coil B nearest the door 20L in question. If the transponder 26 is not within range of the challenge signal it will not produce a response signal and the door will not be opened.

If the transponder 26 is within range and the identities of the vehicle 10 and the transponder 26 match, the transponder transmits back to the security controller 18 a signal in which is encrypted vector information $x_b$, $y_b$, $z_b$.

The vehicle 10 then transmits the same or a different challenge on a different coil, e.g. coil C. The process described above is repeated, such that the transponder 26 provides the vector information $x_c$, $y_c$, $z_c$ back to the security controller 18. Transmissions are made on as many of the coils as are required, either individually or in pairs as described above, for the relative angles and magnitudes of the vectors of the signals from the three coils A, B, C to be calculated. These relative angles and magnitudes are then compared with a vector map of the area in and around the vehicle to determine the position of the transponder. If the transponder 26 is within a predefined area near the door 20L, then the door is opened.

For a passive start application, it is preferred that the transponder 26 and the driver are both within the vehicle 10, not adjacent to it, before allowing the vehicle 10 to be started. Use of the three orthogonal coils X, Y, Z in the transponder 26 and a vector map of the area in and around the vehicle allows the position of the transponder, and hence also the driver, to be determined with a high degree of certainty.

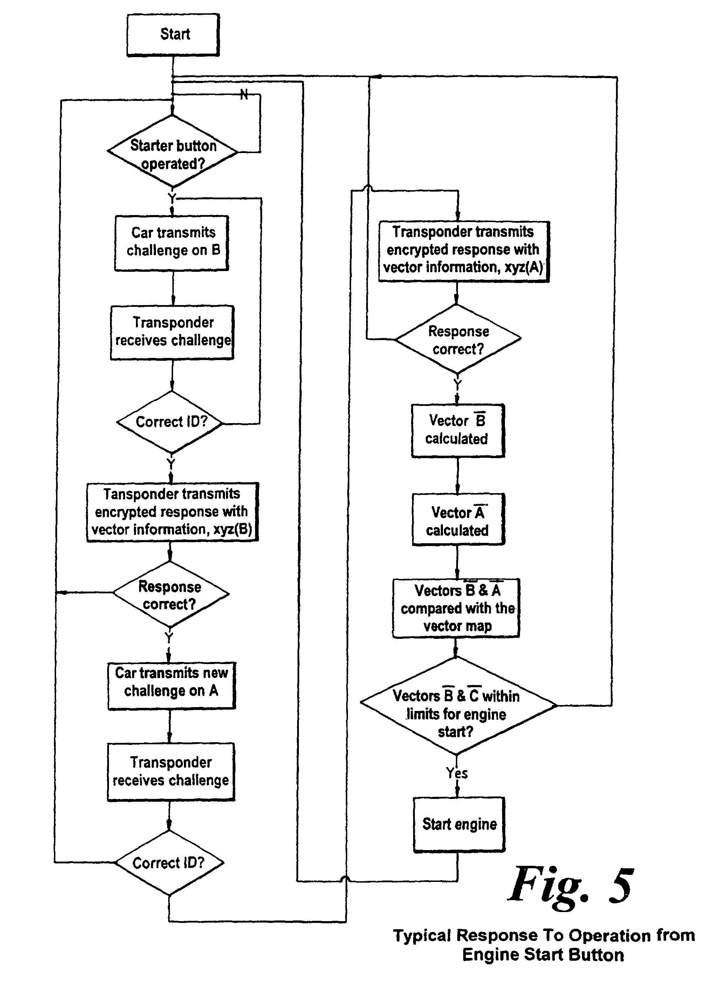

Referring to Figure 5 an example of the process for passive start will be described. If a user has gained access to the vehicle 10 and wishes to start it, he presses the starter button 24, and a challenge signal is sent by the coil B nearest the button 24. If the transponder 26 is not within range then no response signal will be sent and the controller 18 will not allow starting of the vehicle. If the transponder 26 is within range and does receive the challenge, it transmits back to the security controller 18 a signal in which is encrypted vector information, e.g. $x_b$, $y_b$, $z_b$.

The vehicle 10 the challenge signal is then transmitted on all of the coils A, B, C both individually and in combination as required to determine the relative angles of the three coils, and the vector information is transmitted back to the controller 18 in encrypted form. The position of the transponder is then determined and provided it is within the vehicle, the vehicle is started. During this phase of passive remobilization, it may prove advantageous to additionally include further sensing arrangements, such as seat mounted weight sensing, for further security when starting the engine.

Two requirements for the coils X, Y, Z may create problems. Firstly, in the interests of sensitivity, the Q of the receiver coils X, Y, Z will be high and this might lead to variations in signal response. Secondly, to produce a preferred transponder 26 in the form of a flat "credit card"/"smart card" transponder, one of the transponder coils X, Y, Z may need to be a low profile type, also potentially leading to a varying sensitivity.

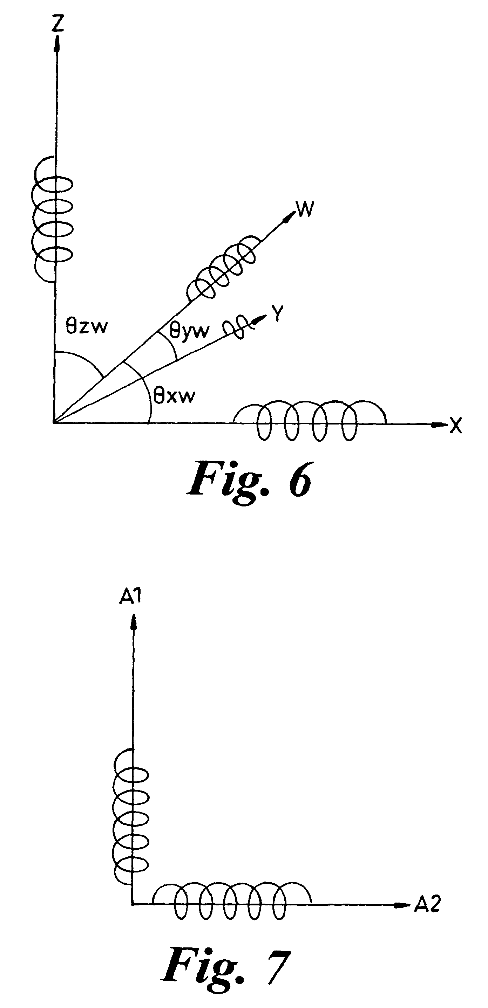

Therefore, it is desirable to include a self-calibration function in the transponder 26. This can be achieved by adding a fourth coil W as shown in Figure 6 which is equally spaced in angle between the other three X, Y, Z and can be used to inject a signal into the three receiver coils X, Y, Z and allow them to be calibrated. Because the angles $\theta_{xw}$ $\theta_{yw}$ $\theta_{zw}$ between the calibration coil W and the other coils X, Y, Z are known, the sensitivities of the three coils X, Y, Z can be determined by measuring their response to a single signal transmitted by coil W. This calibration can be either used to pre-process the signals x, y & z before transmission from the transponder 26 or transmitted in the encrypted response RS for use by the security controller 18 to normalise the signals. The calibration coil W can also be used to compensate for any slight differences in the tuning of the transponder coils X, Y, Z. To do this it is arranged to transmit signals of different frequencies closely spaced around the nominal frequency of the coils, and the responses of the coils X, Y, Z measured. Any differences between the responses of the coils X, Y, Z at the frequency of the challenge signal can then be compensated for in the measurement of the field vector components.

The transponder coil assembly X, Y, Z may, for example, be embedded in a plastic or epoxy material with transponder logic circuits. This would have the advantage of excluding casual inspection or monitoring of the signals by a hacker.

The embodiment described so far relates to a system where the vehicle coils A, B, C transmit at a nominal 125kHz and the transponder 26 responds at 434MHz. Clearly, the related 315, 868 and 900 etc bands can be used. It may be found desirable to use other frequencies for the communication from the vehicle 10. For example, the use of 13.56MHz would allow a lower power transmission and a greater range. The transponder coils X, Y, Z could be changed in scale and possibly also in structure, to accommodate the change. Equally, the use of 434MHz in both directions may allow for some cost reduction in the transponder 26 due to the commonisation of the frequencies.

Referring to Figure 7, it is also possible to introduce a further degree of difficulty into a hacker's task by replacing the transmitter coil A with a pair of coils A1, A2 at mutually orthogonal orientations. The other two coils B and C would similarly be replaced by to orthogonal coils. The field produced by each of the coil pairs A, B and C can then be rotated by varying the relative strengths of the signals from the two coils in the pair. This means that during the transmission of a challenge signal, which will generally be in the form of a number of bits, the direction of the field can be varied, for example by simply switching between coils for subsequent bits, or by combining signals from the two coils to provide a combined field the direction of which can then be rotated in a more complex manner over a range of angles by varying the relative strengths of the two signals. The changes in direction of the field can then be detected by the transponder and used as the vector information which is relayed back to the controller 18 and checked before allowing access to, or starting of, the vehicle. Indeed this approach can be used with only one pair of coils at a single location on the vehicle. In this case the field may still vary with position, and may therefore be used to give some degree of checking on the position of the transponder, and this combined with the complication for a hacker of detecting, and relaying information about, the vector quantities of the signal can provide sufficient security for some applications. It also has the advantage of reduced cost compared with a system having a number of transmitters located around the vehicle.

In a further modification to this technique it will be appreciated that signals from the separate coils A, B and C, if transmitted simultaneously, will combine to form a field the direction of which is dependent on which of the coils A, B or C or which combinations of two or all three of them are transmitting. Again this means that the direction of the field at any point round the vehicle can be varied with time by varying the relative strengths of the signals from the coils A, B, C, and this variation used as at least part of the relevant vector information. Therefore as described above, the field direction can be modified in a pre-determined manner on a bit by bit basis as a code modulation. The transponder 26 can be set up only to respond to a correct code in this modulation, or to relay the modulation information back to the controller for checking before access to the vehicle is allowed.

Hall effect sensors could be used instead of transponder coils X, Y, Z. If using a Hall effect sensor for measurement of the direction of the magnetic fields, then data can also be sent without a carrier frequency. Use of a DC field as the challenge signal would save the need to generate and condition AC signals. Furthermore, Hall effect transducers lend themselves better to integration in "smart card" structures than do coils.

In a further embodiment of the invention the transmitter coils A, B, C are arranged to transmit at much higher frequencies in the GHz waveband. At these frequencies the signals in the area in and around the vehicle will no longer be in the near field region, but will instead be in the far field region. This means that they will be propagating as electromagnetic radiation, and the direction of the electric and magnetic fields will be perpendicular to the direction of travel of the radiation, which in turn will be in a straight line away from the transmitting coil. Therefore the relative angles of the various transmitters from the transponder can be measured directly by measuring the differences in angle between the fields of the signals from the transmitters. Also at these frequencies the same frequency can be used for the challenge signal and the response signal allowing for some cost reduction in the transponder unit.

**Claims**

1. A security system comprising a security controller (18) and a plurality of signal transmitters (A, B, C) associated with a protected object (10), and a portable transponder (26) arranged in use to receive a challenge signal from said transmitters (A, B, C) and to transmit a response signal in response thereto, **characterised in that** the challenge signal comprises vector information relating to the direction of a magnetic field generated by each of said transmitters (A, B, C), and **in that** means are provided for carrying out a comparison between said vector information and a vector map of an area associated with the protected object (10) to determine the position of the transponder (26) in relation to the protected object (10), and **in that** the security controller (18) is arranged to perform a security function (18) depending on the comparison.

2. A security system according to claim 1 wherein the vector information comprises the relative directions of at least a component of the signals from the respective transmitters (A, B, C).

3. A security system according to either preceding claim wherein the vector information comprises the relative strengths of at least a component of the signals from the respective transmitters (A, B, C).

4. A security system according to any preceding claim wherein the transponder (26) is arranged to relay said vector information to the security controller (18) and the security controller is arranged to determine from the vector information the position of the transponder in relation to the protected object.

5. A security system according to any of claims 1 to 3 wherein the transponder (26) is arranged to determine from the vector information its position in relation to the protected object and to vary its response accordingly.

6. A security system according to any preceding claim, wherein the transmitters (A, B, C) are arranged in groups, each group comprising at least two transmitters (A1, A2) located substantially together in different orientations.

7. A system according to any foregoing claim wherein the challenge signal comprises a plurality of components ($x_A$, $y_A$, $z_A$, $x_B$, $y_B$, $z_B$) from different transmitters (A, B, C, A1, A2), and the relative strengths of the components within the signal is arranged to vary with time during transmission of the challenge signal.

8. A security system according to any preceding claim, wherein the transponder (26) comprises a plurality of sensors (X, Y, Z) arranged to detect different components ($x_A$, $y_A$, $z_A$) of the challenge signal.

9. A security system according to claim 8 wherein said components ($x_A$, $y_A$, $z_A$) are substantially mutually orthogonal.

10. A security system according to claim 8 or claim 9 wherein the transponder (26) further comprises a calibration transmitter (W) arranged to transmit a signal at a known orientation relative to said sensors (X, Y, Z) so as to enable calibration of the sensors.

11. A security system according to any foregoing claim wherein the object (10) is a vehicle and the security function comprises allowing access to the vehicle.

12. A security system according to claim 11 further comprising a plurality of sensors (22L, 22R) each associated with a respective closure (20L, 20R) of the vehicle, the security controller (18) is arranged to issue the challenge signal in response to an attempt by a user to open one of the closures (20L, 20R).

13. A security system according to any of claims 1 to claim 10 wherein the object (10) is a vehicle and the security function comprises enabling the vehicle to start.

**Patentansprüche**

1. Sicherheitssystem mit einer Sicherheitssteuerung (18) und mehreren Singalsendern (A, B, C), die einem geschützten Objekt (10) zugeordnet sind, und einem tragbaren Transponder (26), der so angeordnet ist, daß er ein Abfragesignal von den Sendern (A, B, C) empfängt und als Antwort darauf ein Antwortsignal sendet, **dadurch gekennzeichnet, daß** das Abfragesignal Vektorinformationen bezüglich der Richtung eines von jedem der Sender (A, B, C) erzeugten Magnetfelds umfaßt und daß Mittel zur Ausführung eines Vergleichs zwischen den Vektorinformationen und einer Vektorabbildung eines dem geschützten Objekt (10) zugeordneten Bereichs vorgesehen sind, um die Position des Transponders (26) in bezug auf das geschützte Objekt (10) zu bestimmen, und daß die Sicherheitssteuerung (18) so angeordnet ist, daß sie abhängig von dem Vergleich eine Sicherheitsfunktion (18) durchführt.

2. Sicherheitssystem nach Anspruch 1, wobei die Vektorinformationen die relativen Richtungen von mindestens einer Komponente der Signale von den jeweiligen Sendern (A, B, C) umfassen.

3. Sicherheitssystem nach einem der vorhergehenden Ansprüche, wobei die Vektorinformationen die relativen Stärken mindestens einer Komponente der Signale von den jeweiligen Sendern (A, B, C) umfassen.

4. Sicherheitssystem nach einem der vorhergehenden Ansprüche, wobei der Transponder (26) so angeordnet ist, daß er die Vektorinformationen zu der Sicherheitssteuerung (18) weiterleitet und die Sicherheitssteuerung so angeordnet ist, daß sie aus den Vektorinformationen die Position des Transponders in bezug auf das geschützte Objekt bestimmt.

**5.** Sicherheitssystem nach einem der Ansprüche 1 bis 3, wobei der Transponder (26) so angeordnet ist, daß er aus den Vektorinformationen seine Position in bezug auf das geschützte Objekt bestimmt und seine Antwort entsprechend variiert.

**6.** Sicherheitssystem nach einem der vorhergehenden Ansprüche, wobei die Sender (A, B, C) in Gruppen angeordnet sind, wobei jede Gruppe mindestens zwei Sender (A1, A2) umfaßt, die im wesentlichen zusammen in verschiedenen Orientierungen angeordnet sind.

**7.** System nach einem der vorhergehenden Ansprüche, wobei das Abfragesignal mehrere Komponenten ($x_A$, $y_A$, $z_A$, $x_B$, $y_B$, $z_B$) von verschiedenen Sendern (A, B, C, A1, A2) umfaßt und die relativen Stärken der Komponenten in dem Signal so angeordnet sind, daß sie während der Übertragung des Abfragesignals zeitlich variieren.

**8.** Sicherheitssystem nach einem der vorhergehenden Ansprüche, wobei der Transponder (26) mehrere Sensoren (X, Y, Z) umfaßt, die so angeordnet sind, daß sie verschiedene Komponenten ($x_A$, $y_A$, $z_A$) des Abfragesignals erkennen.

**9.** Sicherheitssystem nach Anspruch 8, wobei die Komponenten ($x_A$, $y_A$, $z_A$) im wesentlichen untereinander orthogonal sind.

**10.** Sicherheitssystem nach Anspruch 8 oder Anspruch 9, wobei der Transponder (26) weiterhin einen Kalibrationssender (W) umfaßt, der so angeordnet ist, daß er ein Signal mit einer bekannten Orientierung relativ zu den Sensoren (X, Y, Z) sendet, um so eine Kalibration der Sensoren zu ermöglichen.

**11.** Sicherheitssystem nach einem der vorhergehenden Ansprüche, wobei das Objekt (10) ein Fahrzeug ist und die Sicherheitsfunktion das Erlauben eines Zugangs zu dem Fahrzeug umfaßt.

**12.** Sicherheitssystem nach Anspruch 11, weiterhin mit mehreren Sensoren (22L, 22R), die jeweils mit einem jeweiligen Verschluß (20L, 20R) des Fahrzeugs assoziiert sind, wobei die Sicherheitssteuerung (18) so angeordnet ist, daß sie das Abfragesignal als Reaktion auf einen Versuch durch einen Benutzer, einen der Verschlüsse (20L, 20R) zu öffnen, ausgibt.

**13.** Sicherheitssystem nach einem der Ansprüche 1 bis 10, wobei das Objekt (10) ein Fahrzeug ist und die Sicherheitsfunktion das Erlauben des Anlassens des Fahrzeugs umfaßt.

**Revendications**

**1.** Système de sécurité comprenant une unité de commande de sécurité (18) et une pluralité d'émetteurs de signaux (A, B, C) associés à un objet protégé (10), et un transpondeur portatif (26) adapté, en service, pour recevoir un signal de provocation provenant desdits émetteurs (A, B, C) et pour transmettre un signal de réponse en réponse à celui-ci, **caractérisé en ce que** le signal de provocation comprend des informations vectorielles relatives à la direction d'un champ magnétique généré par chacun desdits émetteurs (A, B, C), et **en ce que** des moyens sont prévus pour effectuer une comparaison entre lesdites informations vectorielles et une carte vectorielle d'une zone associée à l'objet protégé (10) en vue de déterminer la position du transpondeur (26) par rapport à l'objet protégé (10), et **en ce que** l'unité de commande de sécurité (18) est adaptée pour assurer une fonction de sécurité (18) en fonction de la comparaison.

**2.** Système de sécurité selon la revendication 1, dans lequel les informations vectorielles comprennent les directions relatives d'au moins une composante des signaux provenant des émetteurs (A, B, C) respectifs.

**3.** Système de sécurité selon l'une quelconque des revendications précédentes, dans lequel les informations vectorielles comprennent les intensités relatives d'au moins une composante des signaux provenant des émetteurs (A, B, C) respectifs.

**4.** Système de sécurité selon l'une quelconque des revendications précédentes, dans lequel le transpondeur (26) est adapté pour relayer lesdites informations vectorielles à l'unité de commande de sécurité (18) et l'unité de commande de sécurité est adaptée pour déterminer à partir des informations vectorielles la position du transpondeur par rapport à l'objet protégé.

5. Système de sécurité selon l'une quelconque des revendications 1 à 3, dans lequel le transpondeur (26) est adapté pour déterminer à partir des informations vectorielles sa position par rapport à l'objet protégé et pour faire varier sa réponse en conséquence.

6. Système de sécurité selon l'une quelconque des revendications précédentes, dans lequel les émetteurs (A, B, C) sont agencés en groupes, chaque groupe comprenant au moins deux émetteurs (A1, A2) situés sensiblement ensemble suivant des orientations différentes.

7. Système selon l'une quelconque des revendications précédentes, dans lequel le signal de provocation comprend une pluralité de composantes ($x_A$, $y_A$, $z_A$, $x_B$, $y_B$, $z_B$) provenant d'émetteurs différents (A, B, C,. A1, A2), et les intensités relatives des composantes dans le signal sont adaptées pour varier dans le temps durant la transmission du signal de provocation.

8. Système de sécurité selon l'une quelconque des revendications précédentes, dans lequel le transpondeur (26) comprend une pluralité de capteurs (X, Y, Z) adaptés pour détecter différentes composantes ($x_A$, $y_A$, $z_A$) du signal de provocation.

9. Système de sécurité selon la revendication 8, dans lequel lesdites composantes ($x_A$, $y_A$, $z_A$) sont sensiblement orthogonales les unes aux autres.

10. Système de sécurité selon la revendication 8 ou la revendication 9, dans lequel le transpondeur (26) comprend en outre un émetteur d'étalonnage (W) adapté pour transmettre un signal suivant une orientation connue par rapport auxdits capteurs (X, Y, Z) de façon à permettre l'étalonnage des capteurs.

11. Système de sécurité selon l'une quelconque des revendications précédentes, dans lequel l'objet (10) est un véhicule et la fonction de sécurité comprend une autorisation d'accéder au véhicule.

12. Système de sécurité selon la revendication 11, comprenant en outre une pluralité de capteurs (22L, 22R), chacun étant associé à une fermeture respective (20L, 20R) du véhicule, l'unité de commande de sécurité (18) est adaptée pour émettre le signal de provocation en réponse à une tentative faite par l'utilisateur d'ouvrir une des fermetures (20L, 20R).

13. Système de sécurité selon l'une quelconque des revendications 1 à 10, dans lequel l'objet (10) est un véhicule et la fonction de sécurité comprend une autorisation de démarrer le véhicule.

*Fig. 1*

*Fig. 2*

**Fig. 3a**

**Fig. 3b**

**Fig. 3c**

**Fig. 3d**

*Fig. 4*

**Typical Response To Operation from Door.**

Start

N

Starter button operated?

Y

Car transmits challenge on B

Transponder receives challenge

Correct ID?

Y

Tansponder transmits encrypted response with vector information, xyz(B)

Response correct?

Y

Car transmits new challenge on A

Transponder receives challenge

Correct ID?

Transponder transmits encrypted response with vector information, xyz(A)

Response correct?

Y

Vector $\overline{B}$ calculated

Vector $\overline{A}$ calculated

Vectors $\overline{B}$ & $\overline{A}$ compared with the vector map

Vectors $\overline{B}$ & $\overline{C}$ within limits for engine start?

Yes

Start engine

## Fig. 5

**Typical Response To Operation from Engine Start Button**

## Fig. 6

## Fig. 7